# EUROPÄISCHE PATENTANMELDUNG

(11) **EP 4 137 424 A1**
(43) Veröffentlichungstag der Anmeldung: **22.02.2023**
(21) Anmeldenummer: 22189722.6
(22) Anmeldetag: 10.08.2022
(51) Int. Cl.: B65G 13/12, B65G 47/64, B65G 41/00, B65G 13/10

(54) **ROLLGANGSWAGEN ZUM TRANSPORT VON BRAMMEN**

(30) Priorität: 19.08.2021 AT 506702021
(71) Anmelder: Primetals Technologies Austria GmbH, 4031 Linz (AT)
(72) Erfinder: Szakal, Peter, 4300 St. Valentin (AT); Hinterreiter, Christian, 4210 Unterweitersdorf (AT); Höpfler, Andreas, 4212 Neumarkt im Mühlkreis (AT)
(74) Vertreter: Metals@Linz

(57) **Zusammenfassung**

Rollgangswagen (10), der eine gabelartige Verfahrvorrichtung mit mehreren, bevorzugt parallelen, Gabelzinken (80a, 80b, 80c, 80d, 80e) aufweist, wobei auf zumindest zwei Gabelzinken (80a, 80b, 80c, 80d, 80e) Rollgangsrollen (90a, 90b, 90c, 90d, 90e, 90f) angebracht sind, wobei die Rollgangsrollen (90a, 90b, 90c, 90d, 90e, 90f) jeweils eine Drehachse parallel zur Längsachse der jeweiligen Gabelzinke (80a, 80b, 80c, 80d, 80e) haben.

## Beschreibung

### Gebiet der Technik

Die Anmeldung betrifft einen Rollgangswagen.

### Stand der Technik

Es ist bekannt, in einem Stahlwerk feste Rohprodukte, wie beispielsweise Brammen, welche beispielsweise mittels eines Stranggußverfahrens erhalten werden, mittels Rollgängen zu transportieren. Um ein festes Rohprodukt von einem Rollgang auf einen anderen, gegebenenfalls parallelen, Rollgang zu befördern, oder um Rohprodukte von einem Rollgang auf einen Lagerplatz zu transferieren, werden sogenannte Rollgangswagen eingesetzt. Rollgangswagen umfassen einen Rollgangsabschnitt sowie eine Verfahrvorrichtung. Im Rollgangsabschnitt sind wie in einem Rollgang Rollgangsrollen in einem Rahmen derart angeordnet, dass der Rollgangsabschnitt des Rollgangswagens als Teilbereich eines Rollgangs dienen kann. Mittels der Verfahrvorrichtung kann der Rollgangsabschnitt aus einem Rollgang herausverfahren oder in einen Rollgang hineinverfahren werden; meist erfolgt das im Wesentlichen orthogonal zur Längsachse des Rollgangs. Dazu weist ein Rollgangswagen meist Räder auf, die beispielsweise auf Schienen geführt werden. Auf den entsprechend verlegten Schienen kann der Rollgangsabschnitt des Rollgangswagens also aus einem Rollgang heraus oder in einen Rollgang hinein verfahren werden. Ein auf dem Rollgangsabschnitt des Rollgangswagens befindliches Rohprodukt kann dabei beispielsweise aus einem ersten Rollgang heraus in einen zweiten, gegebenenfalls parallelen, Rollgang hineinverfahren werden. Oder ein auf dem Rollgangsabschnitt des Rollgangswagens befindliches Rohprodukt kann aus einem ersten Rollgang heraus zu einer Lagerzugangsposition verfahren werden, wo es von geeigneten Mitteln wie beispielsweise Kränen vom Rollgangsabschnitt entfernt und auf Lagerplätzen abgelegt wird; umgekehrt kann ein aus dem Lager mittels geeigneter Mittel entnommenes Rohprodukt auf den Rollgangsabschnitt eines bereitstehenden Rollgangwagens geliefert werden, um dann mittels des Rollgangwagens einem Rollgang zugeführt zu werden.

Bei herkömmlichen Rollgangswagen weist der Rollgangsabschnitt zwei Längsholme auf, zwischen denen die Rollgangsrollen sprossenartig platziert sind; es ergibt sich eine hier aufgrund ihres Aussehens Rollgangsleiter genannte Vorrichtung. Die Rollgangsleiter ist auf der Verfahrvorrichtung angeordnet. Die Verfahrvorrichtung umfasst in der Regel zumindest zwei mit Rädern versehene Tragbalken; die Tragbalken tragen einerseits die Räder, anderseits die Rollgangsleiter. Die Tragbalken der Verfahrvorrichtung dienen dabei in der Regel auch als Fixiersprossen der Rollgangsleiter; sie fixieren die Längsholme in einem bestimmten Abstand zueinander.

Wenn Rohprodukt von einem Rollgangswagen entnommen werden soll, kann dies beispielsweise von oben oder von der Seite, beispielsweise von der Seite eines Längsholmes der Rollgangsleiter erfolgen. Bei seitlicher Entnahme kann der Längsholm jedoch der Annäherung einer Entnahmevorrichtung im Weg stehen, was die Anpassung der Entnahmevorrichtung an den Rollgangswagen oder des Rollgangswagens an die Entnahmevorrichtung notwendig macht. Gewisse Entnahmevorrichtungen sind gegebenenfalls mit gegebenen Rollgangswagen nicht kompatibel.

### Zusammenfassung der Erfindung

### Technische Aufgabe

Es ist die Aufgabe der vorliegenden Erfindung, eine Lösung vorzustellen, die bei seitlicher Entnahme mehr Freiheit bezüglich der Ausgestaltung einer Entnahmevorrichtung für seitliche Entnahme bietet.

### Technische Lösung

Die Aufgabe wird gelöst durch einen Rollgangswagen für einen Rollgang für festes Rohprodukt eines Stahlwerks, der eine gabelartige Verfahrvorrichtung mit mehreren, bevorzugt parallelen, Gabelzinken aufweist, wobei auf zumindest zwei Gabelzinken Rollgangsrollen angebracht sind, wobei die Rollgangsrollen jeweils eine Drehachse parallel zur Längsachse der jeweiligen Gabelzinke haben.

Es sind zumindest zwei Gabelzinken vorhanden, bevorzugt drei, oder vier, oder fünf, oder sechs, oder mehr.

Festes Rohprodukt ist beispielsweise eine Bramme oder ein Knüppel. Der Rollgang ist beispielsweise ein Brammen-Rollgang, oder ein Knüppel-Rollgang.

Auf einer Gabelzinke kann eine Rollgangsrolle angebracht sein, oder es können auf einer Gabelzinke mehrere Rollgangsrollen angebracht sein. Die Rollgangsrollen sind jeweils um eine Drehachse drehbar. Die Drehachse entspricht der Längsachse der Rollgangsrolle.
Die auf einer Gabelzinke angebrachten Rollgangsrollen haben jeweils eine Längsachse beziehungsweise eine Drehachse, die parallel zur Längsachse der betreffenden Gabelzinke ist.

An zumindest zwei, bevorzugt allen, Gabelzinken ist eine Fahrstütze angebracht. Die Fahrstütze stützt die Gabelzinke beziehungsweise die Verfahrvorrichtung einerseits gegenüber beispielsweise dem Boden oder einer Schiene ab, und dient andererseits der vereinfachten Verfahrbarkeit; es kann sich beispielsweise um ein Rad oder eine Kufe handeln.

Gabelartig bedeutet in diesem Zusammenhang, dass sich von einem länglichen Grundelement ausgehend längliche, bevorzugt gerade, Fortsätze - hier genannt Gabelzinken - erstrecken. Im Betriebszustand sind die Gabelzinken horizontal angeordnet, so wie der Rollgang, in dem der Rollgangswagen eingesetzt werden soll, horizontal ausgerichtet ist.

Bevorzugt ist es, wenn die Längsachsen der länglichen Fortsätze in einem im Wesentlichen rechten Winkel zur Längsachse des Grundelementes stehen. Bei zur Längsachse des Rollgangs, in dem der Rollgangswagen genutzt werden soll, paralleler Anordnung der Längsachse des Grundelementes kann dann eine Anordnung der Rollgangsrollen auf den Gabelzinken einfach in einer Weise so bewerkstelligt werden, dass die Längsachsen beziehungsweise die Drehachsen der Rollgangsrollen passend zu diesem Rollgang orientiert sind.

Bevorzugt sind die Gabelzinken im Wesentlichen parallel. Dadurch kann einfach sichergestellt werden, dass alle Rollgangsrollen auf Gabelzinken passend zu dem Rollgang, in dem der Rollgangswagen eingesetzt werden soll, orientiert sind.

Für ein Grundelement **|** ergibt sich beispielsweise bei rechten Winkeln: bei zwei Gabelzinken ergibt sich in Betriebsstellung bei Draufsicht von oben beispielsweise die Form eines [ , wenn die Gabelzinken weitgehend gleich lang sind; bei drei Gabelzinken ergibt sich in Betriebsstellung bei Draufsicht von oben beispielsweise die Form eines E, wenn die Gabelzinken weitgehend gleich lang sind.

In dem erfindungsgemäße Rollgangswagen wirkt die Verfahrvorrichtung mit den Rollgangsrollen auf Gabelzinken praktisch auch als Rollgangsleiter.

### Vorteilhafte Wirkungen der Erfindung

Ein solcher Rollgangswagen ist im Gegensatz zu herkömmlichen Rollgangswagen mit Rollgangsleiter an einer Seite nicht geschlossen, sondern offen - zwischen den Gabelzinken kann eine Entnahmevorrichtung, beispielsweise ein Querschlepper eingefahren werden, ohne dass auf einen Längsholm einer Rollgangsleiter geachtet werden muss. Bevorzugt ist die Entnahmevorrichtung so ausgebildet, dass sie problemlos in die Zwischenräume zwischen den Gabelzinken einbringbar ist; sie kann dafür beispielsweise eine korrespondierende Gabelform aufweisen.

Nach einer bevorzugten Ausführungsform trägt zumindest eine Gabelzinke mehrere Rollgangsrollen. Dazu kann die Gabelzinke beispielsweise abschnittsweise in mehrere, bevorzugt parallele, Äste aufgespalten sein. Mehrere dieser Äste können jeweils eine Rollgangsrolle tragen.

Nach einer Ausführungsform ist an jedem der Äste eine Fahrstütze, bevorzugt ein Rad, angebracht.

Nach einer Ausführungsform ist sind Äste einer Gabelzinke durch ein Verbindungselement verbunden. Es können mehrere oder alle Äste einer Gabelzinke derart verbunden sein. Die Verbindung erhöht die Stabilität der Konstruktion.

Nach einer Ausführungsform ist an dem Verbindungselement direkt oder indirekt - beispielsweise über einen Trägerfortsatz in Richtung der Längsachse der Gabelzinke - eine Fahrstütze, bevorzugt ein Rad, angebracht.

Nach einer bevorzugten Ausführungsform weist die gabelartige Verfahrvorrichtung sowohl ein längliches Grundelement, von dem ausgehend sich Gabelzinken erstrecken auf, als auch zumindest ein weiteres mehrere, bevorzugt alle, Gabelzinken verbindendes Versteifungselement. Dadurch wird die Stabilität der Verfahrvorrichtung verbessert. Die Gabelform bleibt dabei jedoch weitgehend erhalten; bevorzugt ist ein Versteifungselement in dem Bereich zwischen Grundelement und grundelementseitigem Anfangsbereich der Rollgangsrollen angeordnet.

### Kurze Beschreibung der Zeichnungen

Nachfolgend wird die vorliegende Erfindung anhand mehrerer schematischer Figuren beispielhaft beschrieben.
Figur 1 zeigt schematisch eine herkömmlichen Rollgangswagen.
Figuren 2 zeigt schematisch den herkömmlichen Rollgangswagen aus Figur 1 in seitlicher Ansicht.
Figuren 3 zeigt schematisch einen erfindungsgemäßen Rollgangswagen.
Figur 4 zeigt schematisch den erfindungsgemäßen Rollgangswagen aus Figur 3 in Seitenansicht.

### Beschreibung der Ausführungsformen

### Beispiele

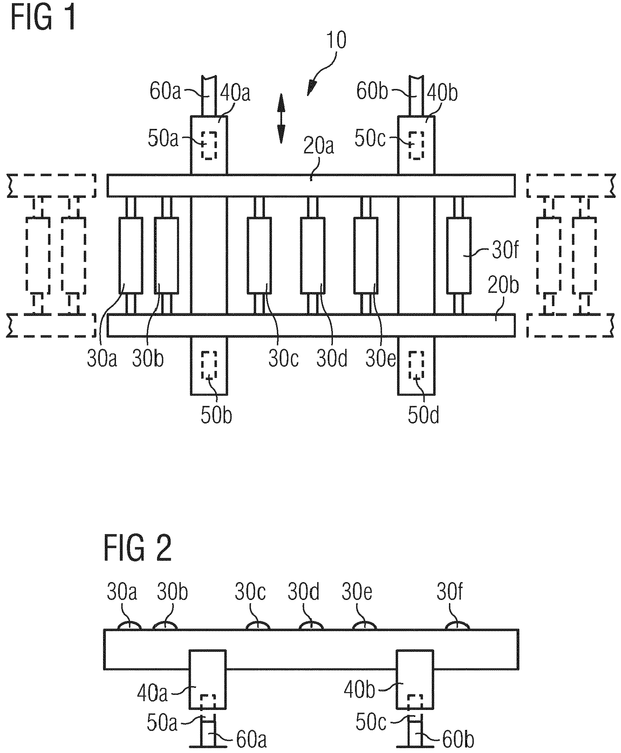

Figur 1 zeigt schematisch einen herkömmlichen Rollgangswagen 10 in seiner Betriebsposition von oben betrachtet. Bei diesem herkömmlichen Rollgangswagen 10 weist der Rollgangsabschnitt zwei Längsholme 20a, 20b auf. Zwischen den Längsholmen 20a, 20b sind Rollgangsrollen 30a, 30b, 30c, 30d, 30e, 30f sprossenartig platziert, so dass die Erscheinung insgesamt einer Leiter ähnelt, die hier Rollgangsleiter genannt wird. Die Rollgangsleiter ist auf einer Verfahrvorrichtung angeordnet, die die Tragbalken 40a, 40b umfasst. Die Tragbalken 40a, 40b sind an ihrer Unterseite mit strichliert angedeuteten Rädern 50a, 50b, 50c, 50d versehen, was in Figur 1 nicht genauer dargestellt ist. Einige Räder 50a, 50c sind aber in Figur 2, welche den Rollgangswagen 1 der Figur 1 in einer seitlichen Ansicht zeigt, genauer zu sehen. Die in Figur 2 deutlicher gezeigten Tragbalken 40a, 40b tragen einerseits die Räder 50a, 50b, 50c, 50d, und anderseits die Rollgangsleiter. Die Tragbalken 40a, 40b der Verfahrvorrichtung dienen dabei auch als Fixiersprossen der Rollgangsleiter; sie fixieren die Längsholme 20a, 20b in einem bestimmten Abstand zueinander. Die Räder 50a, 50b, 50c, 50d laufen im dargestellten Beispiel auf Schienen 60a, 60b, um in den durch einen Doppelpfeil dargestellten Richtungen verfahren werden zu können. Dargestellt sind auch strichliert rechts und links des Rollgangswagens Bereiche eines Rollgangs, an die der Rollgangswagen wie dargestellt angrenzt.

In der Seitenansicht der Figur 2 sind die entsprechenden Teile mit den in Figur 1 verwendeten Bezugszeichen versehen

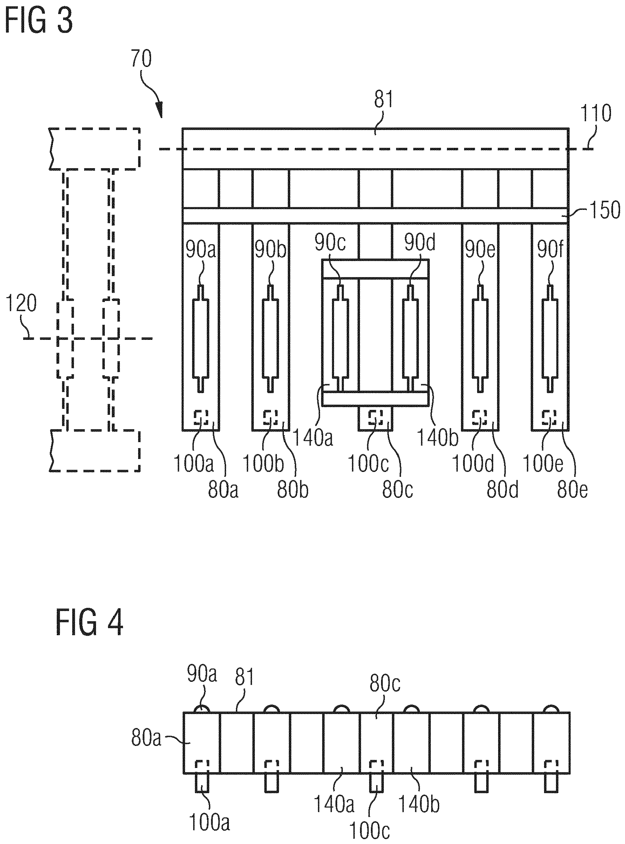

Figur 3 zeigt schematisch in einer zu Figur 1 analogen Ansicht einen erfindungsgemäßen Rollgangswagen 70. Der Rollgangswagen 70 weist eine gabelartige Verfahrvorrichtung mit fünf parallelen Gabelzinken 80a, 80b, 80c, 80d, 80e an einem länglichen Grundelement 81. An allen Gabelzinken 80a, 80b, 80c, 80d, 80e sind Rollgangsrollen 90a, 90b, 90c, 90d, 90e, 90f angebracht. Die Rollgangsrollen 90a, 90b, 90c, 90d, 90e, 90f haben jeweils eine Drehachse parallel zur Längsachse der jeweiligen Gabelzinke 80a, 80b, 80c, 80d, 80e.

An allen Gabelzinken 80a, 80b, 80c, 80d, 80e sind Fahrstützen, hier Räder 100a, 100b, 100c, 100d, 100e angebracht.

Wie in Figur 4, die den Rollgangswagen 70 der Figur 3 in einer seitlichen Ansicht darstellt, besser zu sehen ist, sind die Gabelzinken in Betriebsposition horizontal ausgerichtet. In Figur 3 ist zu sehen, dass die Längsachsen der Gabelzinken 80a, 80b, 80c, 80d, 80e in einem im Wesentlichen rechten Winkel zur Längsachse des länglichen Grundelementes 110 des Rollgangswagens 70 stehen. Wie man sieht, ist die Längsachse 120 des Rollgangs, in dem der Rollgangswagen genutzt werden soll, parallel zur Längsachse des länglichen Grundelementes 110 angeordnet. Daher sind die Rollgangsrollen 90a, 90b, 90c, 90d, 90e, 90f auf den Gabelzinken 80a, 80b, 80c, 80d, 80e so angeordnet, dass die Längsachsen beziehungsweise die Drehachsen der Rollgangsrollen 90a, 90b, 90c, 90d, 90e, 90f passend zu diesem Rollgang orientiert sind.

In dem erfindungsgemäße Rollgangswagen 70 wirkt die gabelartige Verfahrvorrichtung mit den Rollgangsrollen 90a, 90b, 90c, 90d, 90e, 90f auf Gabelzinken 80a, 80b, 80c, 80d, 80e praktisch auch als Rollgangsleiter.

Gabelzinke 80c ist in einem Mittelabschnitt in zwei Äste aufgespalten, die vom länglichen Grundelement gesehen jenseits der Aufspaltung durch ein Verbindungselement 130 verbunden sind. Die Aufspaltung der Gabelzinke 80c ist durch ein analoges Verbindungselement realisiert. Jeder der beiden parallelen Äste 140a, 140b trägt eine Rollgangsrolle 90c, 90d. Gabelzinke 80c trägt also mehrere Rollgangsrollen. An dem Verbindungselement 130 ist über einen Trägerfortsatz, der praktisch das Ende der Gabelzinke 80c darstellt, das Rad 100c als Fahrstütze angebracht.

In der dargestellten Ausführungsform weist die die gabelartige Verfahrvorrichtung sowohl das längliche Grundelement 81, von dem ausgehend sich Gabelzinken 80a, 80b, 80c, 80d, 80e erstrecken, als auch ein weiteres alle Gabelzinken 80a, 80b, 80c, 80d, 80e verbindendes Versteifungselement 150 auf. Dadurch wird die Stabilität der Verfahrvorrichtung verbessert. Das Versteifungselement 150 ist in dem Bereich zwischen länglichem Grundelement 81 und grundelementseitigem Anfangsbereich der Rollgangsrollen 90a, 90b, 90c, 90d, 90e, 90f angeordnet. Zur besseren Übersichtlichkeit wurde in Figur 4 auf die Darstellung des Versteifungselementes aus Figur 3 verzichtet.

### Liste der Bezugszeichen

- 10: Rollgangswagen
- 20a, 20b: Längsholm
- 30, 30b, 30c, 30d, 30e, 30f: Rollgangsrollen
- 40a, 40b: Tragbalken
- 50a, 50b, 50c, 50d: Rad
- 60a, 60b: Schienen
- 70: Rollgangswagen
- 80a, 80b, 80c, 80d, 80e: Gabelzinke
- 81: längliches Grundelement
- 90a, 90b, 90c, 90d, 90e, 90f: Rollgangsrolle
- 100a, 100b, 100c, 100d, 100e: Rad
- 110: Längsachse des länglichen Grundelementes
- 120: Längsachse des Rollgangs
- 130: Verbindungselement
- 140a, 140b: Ast
- 150: Versteifungselement

## Patentansprüche

1. Rollgangswagen (10) für einen Rollgang für festes Rohprodukt eines Stahlwerks, der eine gabelartige Verfahrvorrichtung mit mehreren, bevorzugt parallelen, Gabelzinken (80a, 80b, 80c, 80d, 80e) aufweist, wobei auf zumindest zwei Gabelzinken (80a, 80b, 80c, 80d, 80e) Rollgangsrollen (90a, 90b, 90c, 90d, 90e, 90f) angebracht sind, wobei die Rollgangsrollen (90a, 90b, 90c, 90d, 90e, 90f) jeweils eine Drehachse parallel zur Längsachse der jeweiligen Gabelzinke (80a, 80b, 80c, 80d, 80e) haben.

2. Rollgangswagen nach Anspruch 1, wobei die Längsachsen der Gabelzinken (80a, 80b, 80c, 80d, 80e) in einem im Wesentlichen rechten Winkel zur Längsachse eines Grundelementes des Rollgangswagens stehen.

3. Rollgangswagen nach Anspruch 1 oder 2, wobei die Gabelzinken im Wesentlichen parallel angeordnet sind.

4. Rollgangswagen nach einem der Ansprüche 1 bis 3, wobei zumindest eine Gabelzinke mehrere Rollgangsrollen trägt.

5. Rollgangswagen nach einem der Ansprüche 1 bis 4, wobei zumindest eine Gabelzinke in mehrere Äste aufgespalten ist, und an jedem der Äste eine Fahrstütze, bevorzugt ein Rad, angebracht ist.

6. Rollgangswagen nach Anspruch 5, wobei zumindest einige Äste einer Gabelzinke durch ein Verbindungselement verbunden sind.

7. Rollgangswagen nach Anspruch 6, wobei an dem Verbindungselement direkt oder indirekt eine Fahrstütze, bevorzugt ein Rad, angebracht ist.

8. Rollgangswagen nach einem der Ansprüche 1 bis 7, wobei die gabelartige Verfahrvorrichtung sowohl ein längliches Grundelement (81), von dem ausgehend sich Gabelzinken (80a, 80b, 80c, 80d, 80e) erstrecken aufweist, als auch zumindest ein weiteres mehrere, bevorzugt alle, Gabelzinken (80a, 80b, 80c, 80d, 80e) verbindendes Versteifungselement (150).
